# EUROPÄISCHE PATENTANMELDUNG

(11) **EP 0 734 028 A1**
(43) Veröffentlichungstag der Anmeldung: **25.09.1996**
(21) Anmeldenummer: 96104544.0
(22) Anmeldetag: 21.03.1996
(51) Int. Cl.: G21C 15/18, G21C 9/012

(54) **Sicherheitsbehälter einer Kernkraftanlage**

(30) Priorität: 21.03.1995 DE 19510253
(71) Anmelder: SIEMENS AKTIENGESELLSCHAFT, 80333 München (DE)
(72) Erfinder: Palavecino, Carlos, Dipl.-Ing., 63263 Neu-Isenburg (DE)

(57) **Zusammenfassung**

Die Erfindung betrifft einen Sicherheitsbehälter (1) nach dem Druckunterdrückungsprinzip für eine Kernkraftanlage mit einem entlang einer Hauptachse (4) angeordneten Reaktordruckbehälter, welcher einen Reaktorkern (6) beinhaltet, mit einer Druckkammer (2), die den Reaktordruckbehälter (5) umgibt und mit einer Kondensationskammer (3). Die Kondensationskammer (3) hat einen Luftbereich (8), der geodätisch oberhalb eines Flüssigkeitsbereiches (9) zur Aufnahme von Kühlflüssigkeit (11) angeordnet ist. Der Flüssigkeitsbereich (9) wiederum ist weitgehend geodätisch oberhalb der Druckkammer (2) angeordnet und mit dieser über Strömungswege (7a, 7b, 18) verbunden. Im Falle einer Betriebsstörung der Kernkraftanlage mit Verlust von Kernkühlmittel erfolgt eine Kühlung des Reaktorkerns (6) sowie eine Abfuhr der entstehenden Wärme weitgehend auf passive Art und Weise. Ein Druckabbau innerhalb der Druckkammer (2) sowie des Reaktordruckbehälters (5) erfolgt durch Einspeisung bzw. Abblasen von Wasserdampf in die Kühlflüssigkeit (11). Nach hinreichendem Abbau des Druckes erfolgt aufgrund der Schwerkraft eine Flutung der Druckkammer (2) mit Kühlflüssigkeit (11) aus dem Flüssigkeitsbereich (9).

## Beschreibung

Die Erfindung betrifft einen Sicherheitsbehälter nach dem Druckunterdrückungsprinzip für eine Kernkraftanlage, welcher einen entlang einer Hauptachse angeordneten Reaktordruckbehälter, der den Reaktorkern beinhaltet, sowie eine Druckkammer und eine Kondensationskammer aufweist.

Im Rahmen der sicherheitstechnischen Auslegung einer Kernkraftanlage ist in der Regel der den Reaktorkern umschließende Reaktordruckbehälter in einem Sicherheitsbehälter angeordnet. In dem Sicherheitsbehälter sind eine Vielzahl von redundanten und diversitären Sicherheitseinrichtungen vorgesehen, durch welche eine sichere Kühlung des Reaktorkerns bei Störungen des normalen Betriebes der Kernkraftanlage, insbesondere bei einem Verlust an Kühlmittel des Reaktorkerns, gewährleistet ist. Der Sicherheitsbehälter gewährleistet zudem als eine gasdichte Hülle, die häufig gegenüber der Umgebung auf einem Unterdruck gehalten wird, daß selbst bei einer Betriebsstörung keine Radioaktivität in die Umgebung gelangt.

Bei einer Leichtwasser-Kernkraftanlage ist es bekannt, insbesondere bei einem Druckwasserreaktor, einen trockenen Sicherheitsbehälter zu verwenden, der als kugelförmige oder zylindrische Schale ausgeführt ist. Hierdurch wird ein großes Volumen umschlossen, in dem sich selbst bei einem unkontrollierten Austritt des unter Druck stehenden Kernkühlmittels aus dem Reaktordruckbehälter ein relativ niedriger Druck einstellt, der die Integrität des Sicherheitsbehälters unberührt läßt. Die den Sicherheitsbehälter bildende Schale besteht häufig aus Stahl und ist zusätzlich von einem Betonmantel umgeben.

Weiterhin ist es beispielsweise aus den europäischen Offenlegungsschriften 0 377 270, 0 596 703 und 0 599 614 bekannt, einen Sicherheitsbehälter mit einem Druckabbausystem, auch als Druckunterdrückungssystem bezeichnet, zu versehen, in dem aus dem Reaktordruckbehälter unkontrolliert ausströmender Wasserdampf kondensiert und somit eine erhöhte Druckbelastung des Sicherheitsbehälters vermieden wird. In diesen Offenlegungschriften ist jeweils eine Siedewasserreaktor-Anlage offenbart, bei der der Sicherheitsbehälter eine meist relativ kleine Druckkammer aus Stahl oder Spannbeton aufweist, die druckfest und gasdicht ist. Diese Druckkammer ist umgeben von einer Kondensationskammer, die ständig mit Wasser gefüllt ist. Die Kondensationskammer ist an die Druckkammer über eine Leitung angeschlossen, die unterhalb des Wasserspiegels in die Kondensationskammer mündet. Bei Eintritt von Wasserdampf in die Druckkammer, welche den Reaktordruckbehälter mit Reaktorkern umschließt, strömt dieser in die Kondensationskammer und wird dort niedergeschlagen. In der Kondensationskammer werden zudem möglicherweise radioaktiv strahlende und kontaminierte Teilchen zurückgehalten. Desweiteren sind bei diesen bekannten Siedewasserreaktor-Anlagen zusätzliche Kondensationskammern vorgesehen, die geodätisch oberhalb der Druckkammer angeordnet sind und ebenfalls zur Kondensation von Wasserdampf und zur Wärmeabfuhr dienen. Die Kondensation des Wasserdampfes oder die Wärmeabfuhr erfolgt dort mit Wärmetauschern oder mit Kühlrohren ohne Stoffaustausch mit dem Wasser der Kondensationskammer.

Bei der aus der EP 0 596 703 A1 sowie aus der EP 0 599 614 A1 bekannten Lösung wird der in einem Wärmetauscher innerhalb der geodätisch oberhalb der Druckkammer angeordneten Kondensationskammer kondensierte Wasserdampf zum Teil zur Kühlung des Reaktorkerns in den Reaktordruckbehälter zurückgeführt. Zusätzlich ist bei der in der EP 0 599 614 A1 vorgeschlagenen Lösung innerhalb der Druckkammer ein Flutbecken angeordnet, mit dem ebenfalls ein Kühlmittelverlust im Reaktordruckbehälter ausgeglichen werden kann. Desweiteren kann ein Kühlmittelverlust auch durch eine in Höhe des Reaktorkerns angeordnete ebenfalls mit Wasser gefüllte Druckausgleichskammer ausgeglichen werden.

Diese Sicherheitssysteme sind Teil einer sogenannten Kühlkette und führen in ihrem Wirksamwerden zeitlich aufeinander abgestimmt zur Abfuhr der Nachzerfallswärme bei einer Betriebsstörung, beispielsweise bei einem Verlust an Kernkühlmittel. Für den ordnungsgemäßen Betrieb dieser Sicherheitssysteme sind eine Vielzahl von Schalthandlungen sowie die Zufuhr von Fremdenergie, beispielsweise elektrischer Energie zum Öffnen von Ventilen, erforderlich. Diese Zuführung von Energie sowie die Durchführung der Schalthandlungen muß auch über einen längeren Zeitraum, beispielsweise 2 bis 7 Tage, gewährleistet sein.

Aufgabe der Erfindung ist es daher, einen Sicherheitsbehälter für eine Kernkraftanlage anzugeben, der auf weitgehend passive Art und Weise die Kühlung des Reaktorkerns sowie die Abfuhr von Wärme im Falle einer Betriebsstörung gewährleistet.

Erfindungsgemäß wird die Aufgabe durch einen Sicherheitsbehälter nach dem Druckunterdrückungsprinzip für eine Kernkraftanlage gelöst, welcher einen entlang einer Hauptachse angeordneten Reaktordruckbehälter, der den Reaktorkern beinhaltet, eine Druckkammer und eine Kondensationskammer, die einen Luftbereich und einen Flüssigkeitsbereich zur Aufnahme von Kühlflüssigkeit umfaßt, aufweist, wobei die Druckkammer den Reaktordruckbehälter umgibt und die Kondensationskammer weitgehend geodätisch oberhalb der Druckkammer angeordnet und die Druckkammer über einen Strömungsweg mit dem Flüssigkeitsbereich verbunden ist.

Durch die Anordnung der Kondensationskammer geodätisch oberhalb der Druckkammer und damit geodätisch oberhalb des Reaktordruckbehälters ist eine passive Wärmeabfuhr sowie eine Kühlung des Reaktorkerns im Falle einer Betriebsstörung, bei der insbesondere aus dem Reaktordruckbehälter heißer unter Druck stehender Wasserdampf ausströmt, auf mehrfache Weise gegeben. Zum ersten kann nach Druckabbau in der Druckkammer aus dem Flüssigkeitsbereich Kühlflüssigkeit über Zuströmwege, welche beispielsweise passiv öffnende Schaltelemente aufweisen, infolge der Schwerkraft sowohl in den Reaktordruckbehälter als auch in die Druckkammer einströmen, wodurch eine Kühlung des Reaktorkerns gewährleistet ist. Zum zweiten ist das von dem Flüssigkeitsbereich sowie dem Luftbereich bereitgestellte Volumen für Kühlflüssigkeit bzw. in den Luftbereich gelangenden Wasserdampf nicht durch Anlagenteile, wie Rohrleitungen, elektrische Leitungen und den Antrieben für die Steuerstäbe, begrenzt. Das Volumen der Kondensationskammer beträgt ein Vielfaches des Volumens der Druckkammer, beispielsweise das Fünf- bis Zehnfache. Es steht somit eine große Menge an Kühlflüssigkeit zur Verfügung, so daß die während der Betriebsstörung auftretende Erwärmung der Kühlflüssigkeit über einen längeren Zeitraum keine zusätzliche Kühlung mittels Kühlketten erfordert. Eine langfristige Kühlung wird über die großflächige Wandung des Luftbereichs erreicht, wobei Wärme an die Umgebung abgegeben werden kann. Der Teil des Wasserdampfes, welcher während einer Betriebsstörung durch den Flüssigkeitsbereich in den Luftbereich der Kondensationskammer gelangt, kann an einer den Luftbereich umschließenden Wandung kondensieren und in den Flüssigkeitsbereich bzw. die Druckkammer zurückströmen. Hierdurch steht das verdampfende Wasser in einem Kreislauf ständig zur Kühlung des Reaktorkerns zur Verfügung. Das Volumen der Kühlflüssigkeit in dem Flüssigkeitsbereich kann so groß sein, daß eine Aufheizung der Kühlflüssigkeit von 30 °C auf 140 °C erst nach sieben Tagen erreicht wird, so daß bis dahin eine zusätzliche Kühlung der Kühlflüssigkeit überhaupt nicht notwendig ist und erst danach eine Kühlung durch Wärmeabgabe über die Wandung des Luftbereichs erforderlich ist. Eine zusätzliche Passivität wird dadurch erreicht, daß der Kühlflüssigkeit ein neutronenabsorbierendes Material, beispielsweise eine 1 %ige Borlösung zugegeben wird, wodurch bei Flutung des Reaktorkerns eine zusätzliche Unterbindung der nuklearen Kettenreaktion erfolgt. Der Sicherheitsbehälter kann daher bei einer Betriebsstörung weitgehend sich selbst überlassen werden, ohne daß eine Vielzahl manueller sowie automatischer Eingriffe in den Kühlvorgang erforderlich sind. Vorzugsweise ist der Flüssigkeitsbereich während eines normalen Betriebes der Kernkraftanlage bis zu einem geodätisch oberhalb der Druckkammer liegenden Pegelstand mit Kühlflüssigkeit befüllt, wobei der Luftbereich sich geodätisch oberhalb des Flüssigkeitsbereiches erstreckt. Durch eine Anordnung von Druckkammer, Flüssigkeitsbereich und Luftbereich, bei der sich der Flüssigkeitsbereich geodätisch oberhalb der Druckkammer und der Luftbereich wiederum oberhalb des Flüssigkeitsbereiches erstreckt, ist gewährleistet, daß aufgrund des hohen Druckes und der hohen Temperatur von aus dem Reaktordruckbehälter in die Druckkammer ausströmendem Wasserdampf dieser zuerst durch den Flüssigkeitsbereich strömt, dort abkühlt und teilweise auskondensiert und der restliche nicht kondensierte Wasserdampf mit deutlich verringerndem Druck in den Luftbereich gelangt. Eine hohe Druckbelastung des Sicherheitsbehälters ist dadurch mit Sicherheit vermieden. Bei hinreichendem Druckabbau in der Druckkammer kann die Kühlflüssigkeit des Flüssigkeitsbereiches durch die Schwerkraft getrieben in die Druckkammer sowie in den Reaktordruckbehälter einströmen. Der Flüssigkeitsbereich kann aus mehreren Kammern bzw. Becken bestehen, die während des normalen Betriebes der Kernkraftanlage durch Verbindungsleitungen miteinander verbunden sind. Während einer Betriebsstörung kann der Flüssigkeitsbereich zusätzlich mit einem Brennelement-Lagerbecken oder einem weiteren Becken verbindbar sein.

Bevorzugt ist ein Strömungsweg, der die Druckkammer mit dem Flüssigkeitsbereich verbindet, annähernd in Form eines auf dem Kopf stehenden U's ausgeführt. Der Scheitelpunkt des auf den Kopf stehenden U's liegt oberhalb des Pegelstandes, den die Kühlflüssigkeit in dem Flüssigkeitsbereich während eines normalen Betriebs der Kernkraftanlage annimmt. Der Strömungsweg hat eine Austrittsöffnung zur Druckkammer und eine Eintrittsöffnung zum Flüssigkeitsbereich hin. Durch die Lage des Scheitelpunkts oberhalb des Pegelstands ist gewährleistet, daß während des normalen Betriebes aus dem Flüssigkeitsbereich keine Kühlflüssigkeit in die Druckkammer gelangt. Der Strömungsweg ist allerdings für aus der Druckkammer ausströmenden Wasserdampf ständig geöffnet. Die Eintrittsöffnung zum Flüssigkeitsbereich hin kann in Form horizontal verlaufender kurzer Kanäle, die in der Nähe des Bodens des Flüssigkeitsbereiches angeordnet sind, ausgestaltet sein. Vorzugsweise ist der Strömungsweg durch zwei vertikal verlaufende Schächte gebildet, die an dem Scheitelpunkt miteinander verbunden sind. Die Schächte haben beispielsweise eine Breite von einigen Metern. Der Strömungsweg kann auch durch ein vertikal verlaufendes in den Flüssigkeitsbereich hineinragendes Rohr gebildet sein, welches von einer Glocke überstülpt ist. Die Glocke ist dicht mit dem Boden des Flüssigkeitsbereiches verbunden und hat im Bereich des Bodens horizontal verlaufende Kanäle, die die Eintrittsöffnung bilden. Das in den Flüssigkeitsbereich hineinragende Ende des vertikal verlaufenden Rohres bzw. der Schächte liegt oberhalb des Pegelstandes, beispielsweise um 1 m. Die Strömungswege, welche den Flüssigkeitsbereich mit der Druckkammer verbinden, sind so ausgestaltet, daß während eines normalen Betriebes der Kernkraftanlage, keine Kühlflüssigkeit aus dem Flüssigkeitsbereich in die Druckkammer gelangt.

Vorzugsweise ist der Luftbereich der Kondensationskammer von einer glockenartigen Stahlwand begrenzt, die eine Außenwandung bildet, welche mit der den Sicherheitsbehälter umgebenden Atmosphäre direkt in Kontakt steht. Das Volumen des Luftbereichs beträgt ein Vielfaches des Volumens der Druckkammer, beispielsweise das Fünf- bis Zehnfache. Die glockenartige Stahlwand kann eine Oberfläche von mehreren 1000 m², beispielsweise 5000 m² betragen, wodurch eine große Wärmetauschfläche mit guter Wärmeleitfähigkeit gegeben ist. Der während einer Betriebsstörung entstehende Wasserdampf, welcher in den Luftbereich gelangt, kann an der Stahlwand, der Stahlschale, kondensieren und entlang dieser zurück in den Flüssigkeitsbereich strömen. Hierdurch wird in dem Sicherheitsbehälter ein geschlossener und autarker Kühlkreislauf für die Kühlung des Reaktorkerns erreicht, welcher keinerlei Eingriffe durch das Bedienungspersonal oder elektrische bzw. mechanische Sicherheitsvorrichtungen bedarf. Der Sicherheitsbehälter ist bevorzugt aus einer Betonstruktur, welche die Druckkammer und den Flüssigkeitsbereich umgibt sowie aus der Stahlwand, welche den Luftbereich umgibt, gebildet. Diese Kombination aus Betonstruktur und Stahlwand ist im Gegensatz zu einem ausschließlich als Stahlkugel hergestelltem Sicherheitsbehälter ohne Druckunterdrückungssystem deutlich einfacher herstellbar.

Vorzugsweise ist in dem Sicherheitsbehälter eine Notkühleinrichtung vorgesehen, die einen Strömungsweg zur Flutung der Druckkammer aufweist, welcher von dem Flüssigkeitsbereich in die Druckkammer hineinragt. Der Strömungsweg ist während eines normalen Betriebes der Kernkraftanlage durch eine Verschlußeinrichtung verschlossen. Die Verschlußeinrichtung kann ein passiv öffnendes Verschlußelement sein, welches bei Erreichen eines kritischen Druckes in der Druckkammer den Strömungsweg freigibt, wodurch nach einer entsprechenden Druckentlastung in der Druckkammer aufgrund der Schwerkraft ein Einströmen von Kühlflüssigkeit aus dem Flüssigkeitsbereich in die Druckkammer erfolgt.

Vorzugsweise weist die Notkühleinrichtung eine Flutleitung zur direkten Flutung des Reaktordruckbehälters auf, die den Flüssigkeitsbereich unmittelbar mit dem Reaktordruckbehälter verbindet. Diese Flutleitung ist während des normalen Betriebes der Kernkraftanlage, insbesondere durch eine passiv öffnende Verschlußarmatur, verschlossen. Bei Überschreiten eines kritischen Druckes oder einer kritischen Temperatur innerhalb des Reaktordruckbehälters oder innerhalb der Druckkammer gibt die Verschlußarmatur die Flutleitung frei. Nach einer Druckentlastung innerhalb des Reaktordruckbehälters erfolgt aufgrund der Schwerkraft ein Einströmen von Kühlflüssigkeit in den Reaktordruckbehälter und dadurch eine direkte Kühlung des Reaktorkerns.
Vorzugsweise ist ein weiterer Strömungsweg zwischen dem Reaktordruckbehälter und dem Flüssigkeitsbereich durch ein Abblasesystem gegeben, welches Abblaseleitungen aufweist, die von dem Reaktordruckbehälter in den Flüssigkeitsbereich hineinführen. In diesen Abblaseleitungen sind Entlastungs- und Steuerventile vorgesehen, die innerhalb der Druckkammer angeordnet sind. Die Ventile können sowohl selbstöffnend als auch durch das Bedienungspersonal oder ein Sicherheitssystem der Kernkraftanlage ansteuerbar sein.

Vorzugsweise haben die Abblaseleitungen in dem Flüssigkeitsbereich eine Mehrzahl von Abblasedüsen, wodurch ein gleichmäßiges und verteiltes Eindüsen von Wasserdampf in die Kühlflüssigkeit erfolgt. Hierdurch entsteht ein besonders effektiver Druckabbau und die Druckbelastung des Sicherheitsbehälters wird deutlich reduziert.

Vorzugsweise ist in dem Flüssigkeitsbereich Kühlflüssikgeit speicherbar, so daß bei einer Flutung der Druckkammer und/oder des Reaktordruckbehälters der Flutungspegelstand der Kuhlflüssigkeit geodätisch oberhalb der Eintrittsöffnung liegt, an welcher der Strömungsweg in den Flüssigkeitsbereich mündet. Hierdurch ist gewährleistet, daß ausströmender Wasserdampf vor Eintritt in den Luftbereich in jedem Fall durch die Kühlflüssigkeit hindurchgeführt wird, so daß stets ein bedeutender Druckabbau stattfindet. Das von der Kühlflüssigkeit eingenommene Volumen beträgt vorzugsweise das 1,5fache bis 2,5fache, insbesondere etwa das 2fache, des von der Druckkammer umschlossenen Volumens.

Bevorzugt ist der Sicherheitsbehälter von einer Schutzhülle umschlossen, die den Luftbereich umgibt, wobei zwischen dem Luftbereich, insbesondere zwischen einer den Luftbereich begrenzende Stahlschale, und der Schutzhülle ein Wärmeaustauschraum zur Führung eines Kühlgases vorgesehen ist. In dem Wärmeaustauschraum erfolgt auf besonders einfache und wirksame Art und Weise eine Übertragung der innerhalb des Sicherheitsbehälters entstehenden Wärme an die den Sicherheitsbehälter umgebende Atmosphäre. Der Wärmeaustauschraum bildet einen weitgehend vertikal verlaufenden Strömungskanal, in dem durch Wärmeaustausch mit dem Luftbereich erwärmtes Kühlgas aufsteigen kann, welches in einem Naturumlauf die Wärme aus dem Sicherheitsbehälter abführt. Durch Ausbildung eines Naturumlaufes oder eines Naturzuges, wie beispielsweise in einem Kamin, ist eine passive Abfuhr der in dem Sicherheitsbehälter entstehenden Wärme erreicht.

Vorzugsweise ist innerhalb des Flüssigkeitsbereiches ein Notkondensator, welcher insbesondere über eine Mehrzahl von Wärmetauscherrohren verfügt, angeordnet. Dieser Notkondensator ist einerseits mit dem Reaktordruckbehälter sowie andererseits mit einer vom Reaktordruckbehälter wegführenden Primärdampfleitung verbunden. Die Wärmetauscherrohre des Notkondensators sind während des normalen Betriebes der Kernkraftanlage mit kalter Kühlflüssigkeit, insbesondere kaltem Wasser, gefüllt und mit Einlaßventilen versehen, die innerhalb der Druckkammer angeordnet sind und während des normalen Betriebes der Kernkraftanlage die Wärmetauscherrohre absperren. Bei einem Öffnen der Einlaßventile werden die Wärmetauscherrohre, insbesondere durch eine Hebelwirkung, entleert, so daß in die Wärmetauscherrohre einströmender Dampf kondensiert und das so entstehende Kondensat in den Reaktorbehälter zur Kühlung des Reaktorkerns einströmt.

Bevorzugt hat der Flüssigkeitsbereich zumindest eine Vertiefung, die in die Druckkammer bis etwa zur Höhe des Reaktorkerns hineinragt und in der ein Notkondensator angeordnet ist. Der Notkondensator weist Wärmetauscherrohre auf, die aus einer Zulaufrohranordnung und einer Ablaufrohranordnung bestehen, wobei die Zulaufrohranordnung mit dem oberen Bereich des Reaktordruckbehälters und die Ablaufrohranordnung mit dem unteren Bereich des Reaktordruckbehälters an einer Stelle oberhalb des Reaktorkerns kommunizieren. Die Zulaufrohranordnung und die Ablaufrohranordnung sind innerhalb des Flüssigkeitsbereiches miteinander verbunden. Im Normalbetrieb der Kernkraftanlage befindet sich somit sowohl in der Zulaufrohranordnung als auch in der Ablaufrohranordnung Reaktorkühlwasser. Bei Abfall des Pegels des Reaktorkühlwassers innerhalb des Reaktordruckbehälters gelangt Wasserdampf in die Zulaufrohranordnung, welcher innerhalb der Wärmetauscherrohre kondensiert und durch die Ablaufrohranordnung zurück in den Reaktordruckbehälter strömt. Der Notkondensator bewirkt somit auf passive Art und Weise eine zusätzliche Kühlung des Reaktorkerns und verhindert zudem einen Austritt von Wasserdampf aus dem Reaktordruckbehälter. Zum Ingangsetzen der Kühlung durch den Notkondensator sind keinerlei Ventile erforderlich.

Anhand der in der Zeichnung dargestellten Ausführungsbeispiele wird der Sicherheitsbehälter näher erläutert. Es zeigen:
- FIG 1: einen Längsschnitt durch einen Sicherheitsbehälter,
- FIG 2: einen Querschnitt in Höhe des Flüssigkeitsbereiches durch den Sicherheitsbehälter gemäß FIG 1,
- FIG 3: einen Längsschnitt durch einen Sicherheitsbehälter,
- FIG 4: einen Längsschnitt eines Strömungsweges von der Druckkammer in den Flüssigkeitsbereich und
- FIG 5: eine schematische Darstellung eines Abblasesystems des Sicherheitsbehälters.

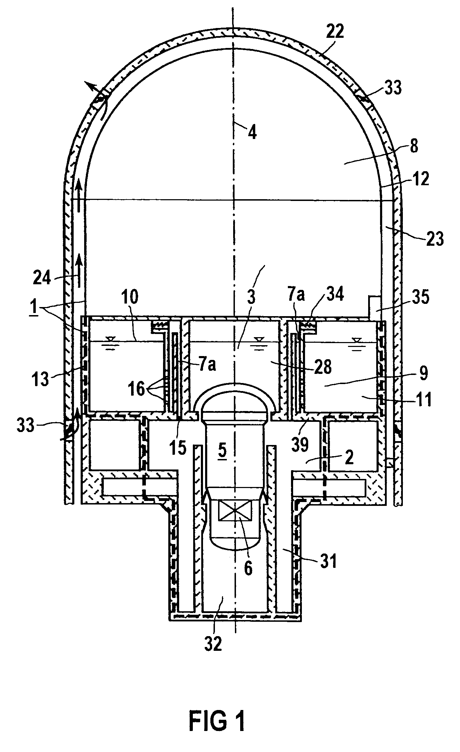

FIG 1 zeigt in einem Längsschnitt einen Sicherheitsbehälter 1 einer Kernkraftanlage mit einem Siedewasser-Reaktor. Der Sicherheitsbehälter 1 hat eine Hauptachse 4, entlang derer er gestreckt und zu der er weitgehend rotationssymmetrisch ist. De Sicherheitsbehälter 1 umschließt einen ebenfalls entlang der Hauptachse 4 gestreckten Reaktordruckbehälter 5, welcher den Reaktorkern 6 der Kernkraftanlage beinhaltet. Der Reaktordruckbehälter 5 ist auf einer Tragstruktur angeordnet und wird von einer Druckkammer 2 gasdicht umschlossen. Seitlich und geodätisch unterhalb des Reaktordruckbehälters 5 ist ein Instrumentierungsraum 31 sowie ein Raum 32 für den Steuerstabantrieb vorgesehen. Die Druckkammer 2 hat eine im wesentlichen aus Beton bestehende Decke 39. Geodätisch oberhalb der Druckkammer 2 schließt sich eine Kondensationskammer 3 an, welche einen Flüssigkeitsbereich 9 sowie geodätisch oberhalb diesem einen Luftbereich 8 aufweist. Der Flüssigkeitsbereich 9 wird durch eine Betonstruktur 13 gebildet und ist in mehrere Becken unterteilt, die bis zu einem Pegelstand 10 mit einer Kühlflüssigkeit 11 gefüllt sind. Die Druckkammer 2 hat ein Volumen von etwa 6.500 m³ und die Kondensationskammer 3 ein Volumen von etwa 47.500 m³. Das Volumen des Flüssigkeitsbereichs 9 beträgt etwa 11.000 m³ bzw. 13.000 m³, wenn die nicht dargestellten Brennelement-Lagerbecken hinzugerechnet werden, und ist somit etwa doppelt so groß, wie das Volumen der Druckkammer 2. Die Druckkammer 2 ist mit dem Flüssigkeitsbereich 9 durch einen Strömungsweg 7a verbunden. Der Strömungsweg 7a führt von einer Austrittsöffnung 15 in der Decke 39 der Druckkammer 2 vertikal in den Flüssigkeitsbereich 9 hinein und erstreckt sich bis zur Höhe eines Scheitelpunkts 14, der oberhalb des Pegelstandes 10, insbesondere 1 m darüber, liegt. Von dem Scheitelpunkt 14 führt der Strömungskanal 7a vertikal nach unten bis zur Decke 39 der Druckkammer 2. Im Bereich der Decke 39 weist der Strömungskanal 7a Austrittsöffnungen 16 in Form kurzer horizontaler Kanäle auf. Der Flüssigkeitsbereich 9 ist mit einer horizontal verlaufenden Decke 42 abgedeckt, welche Luftüberströmschächte 35 und Vakuumbrecher 34 aufweist, durch die eine Verbindung mit dem Luftbereich 8 hergestellt ist. Der Teil des Flüssigkeitsbereiches 9, welcher unmittelbar über dem Reaktordruckbehälter 5 angeordnet ist, bildet einen Teil der Reaktorgrube 28, durch welche der Reaktordruckbehälter 5, insbesondere bei Auswechslung von nicht dargestellten Brennelementen, zugänglich ist. Der Luftbereich 8 wird durch eine schalenartige Stahlwand 12 abgeschlossen. Der Sicherheitsbehälter 1 ist durch eine Schutzhülle 22 aus Beton umgeben. Zwischen der Schutzhülle 22 und der Stahlwand 12 sowie der Betonstruktur 13 ist ein Wärmeaustauschraum 23 vorhanden, in dem Kühlgas 24 strömt. Durch Öffnungen 33 in der Schutzhülle 22, die unterhalb des Flüssigkeitsbereiches 9 sowie im oberen Bereich des Luftraums 8 vorhanden sind, strömt das Kühlgas 24 in den Wärmeaustauschraum 23 hinein bzw. hinaus.

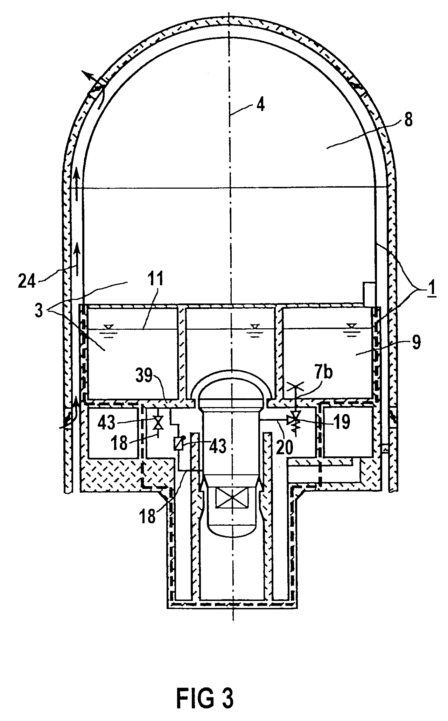

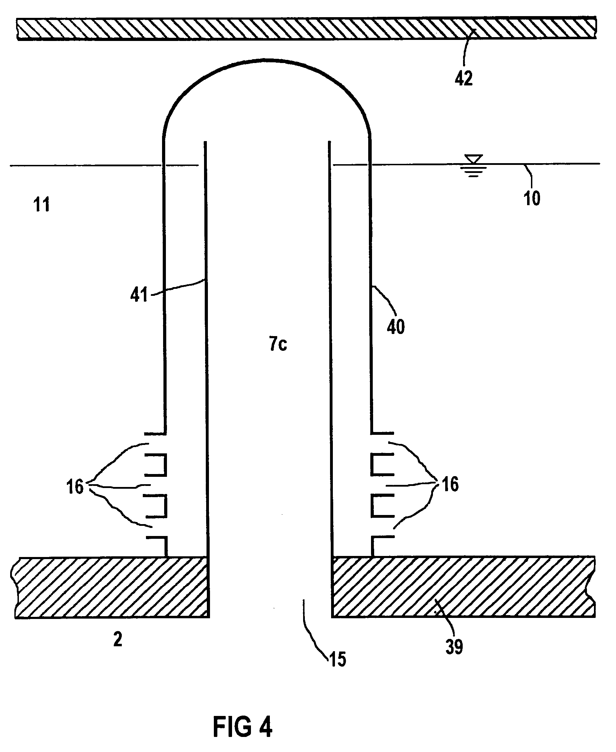

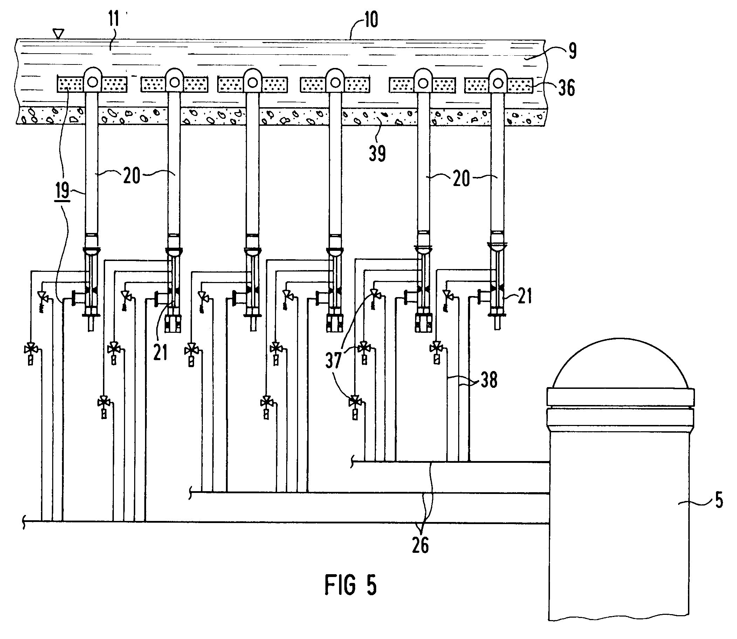

Der dargestellte Sicherheitsbehälter 1 eignet sich besonders zu einer passiven Wärmeabfuhr und zur Kühlung des Reaktorkerns 6, insbesondere im Falle einer Betriebsstörung, bei der beispielsweise durch einen Bruch einer Rohrleitung Kühlmittel, insbesondere in Form heißen und unter Druck stehenden Wasserdampfes, aus dem Reaktordruckbehälter 5 in die Druckkammer 2 einströmt. Der Wasserdampf wird durch den Strömungsweg 7a in die Kühlflüssigkeit 11 geleitet, wo er teilweise kondensiert. Der nicht-kondensierende Wasserdampf tritt mit einem deutlich erniedrigten Druck in den Luftbereich 8 ein und kondensiert an der Stahlwand 12, so daß er wieder in den Flüssigkeitsbereich 9 zurückgelangt. Die von der Stahlwand 12 aufgenommene Wärme wird über das Kühlgas 24 in einem Naturumlauf oder nach dem Naturzugprinzip eines Kamins abgeführt. Bei Erniedrigung des Überdrucks in der Druckkammer 2 strömt, wie in FIG 3 und 5 erläutert, allein aufgrund der Schwerkraft Kühlflüssigkeit 11 in die Druckkammer 2 ein. Durch das große Volumen des Flüssigkeitsbereiches 9 wird bei Flutung der Druckkammer 2 sowie des Reaktordruckbehälters 5 die Druckkammer 2 vollständig geflutet, wobei der sich einstellende Pegelstand zudem oberhalb der Eintrittsöffnungen 16 liegt. Hierdurch ist in jedem Fall gewährleistet, daß in der Druckkammer 2 entstehender Wasserdampf immer durch die Kühlflüssigkeit 11 geführt wird, wodurch ein Druckabbau sicher gewährleistet ist. Die große Menge an Kühlflüssigkeit 11 macht zudem eine Kühlung mittels Kühlketten, d.h. mittels mehrerer unabhängiger und nacheinander aktivierter Kühleinrichtungen, überflüssig, da auf vollständig passive Art und Weise eine Warmeabfuhr über die Stahlwand 12 und das Kühlgas 24 an die Umgebung erfolgt. Die Kühlung des Reaktorkerns 6 erfolgt somit bis auf ein Öffnen der in FIG 4 dargestellten Entlastungsventile 21 sowie eines Verschlusses der nicht dargestellten den Sicherheitsbehälter 1 durchdringenden Armaturen auf vollständig passive Art und Weise. Der Sicherheitsbehälter 1 sowie auch die gesamte Kernkraftanlage bedürfen somit im Falle obiger Betriebsstörung lediglich einzelner weniger Schalthandlungen, wodurch für die Beherrschung der Betriebsstörung der Einsatz von Betriebspersonal und das Funktionieren fremdenergiebetriebener Sicherheitssysteme auf ein Minimum reduziert wird.

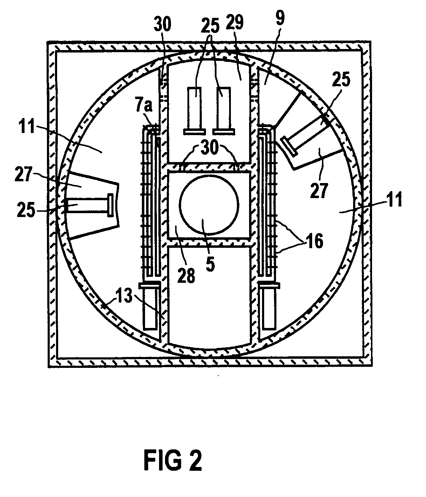

FIG 2 zeigt einen Querschnitt durch den Sicherheitsbehälter 1 gemäß FIG 1 in Höhe des Flüssigkeitsbereichs 9. Die Bedeutung der bereits erwähnten Bezugszeichen, welche mit denen aus FIG 1 übereinstimmen, entspricht der zu FIG 1 genannten Bedeutung. Innerhalb des durch die Betonstruktur 13 gebildeten Flüssigkeitsbereiches 9 sind Notkondensatoren 25 in Vertiefungen 27 angeordnet, wobei die Vertiefungen 27 geodätisch unterhalb der Decke 39 der Druckkammer 2 liegen. Die beiden dargestellten Strömungskanäle 7a weisen sowohl in vertikaler Richtung (siehe FIG 1) als auch in horizontaler Richtung eine Mehrzahl von Austrittsöffnungen 16 auf. In horizontaler Richtung erstreckt sich jeder Strömungskanal 7a über eine Breite, welche etwa dem halben Durchmesser des Sicherheitsbehälters 1 entspricht. Die Betonstruktur 13, welche eine kreisringförmige Begrenzung aufweist, unterteilt den Flüssigkeitsbereich 9 durch gerade verlaufende, teilweise senkrecht zueinander stehende Wände, in verschiedene Becken 29, die durch Verbindungsleitungen 30 miteinander verbunden sind. Hierdurch ist gewährleistet, daß bei einer Flutung der Druckkammer 2 das gesamte Volumen der Kühlflüssigkeit 11 für eine Kühlung des Reaktorkerns 6 zur Verfügung steht. Die Notkondensatoren 25 weisen hier nicht dargestellte Wärmetauscherrohre auf, die von einem oberen Bereich des Reaktordruckbehälters 5 in die Vertiefungen 27 hineinführen und von dort in den Reaktordruckbehälter 5 auf ein geodätisch tieferliegendes Niveau zurückführen. Bei einem Absinken des Pegels des Reaktorkühlwassers innerhalb des Reaktordruckbehälters 5 gelangt in die Wärmetauscherrohre des Notkondensators 25 Wasserdampf, welcher dort kondensiert und in den Reaktordruckbehälter 5 zur Kühlung des Reaktorkerns 6 zurückströmt. Jeder Notkondensator 25 trägt somit zusätzlich zu einer passiven - da ohne jegliche Schalthandlungen - Kühlung des Reaktorkerns 6 bei.

FIG 3 zeigt den in FIG 1 dargestellten Sicherheitsbehälter 1 ebenfalls in einem Längsschnitt, wobei die jeweilige Bedeutung der Bezugszeichen aus FIG 1 erhalten bleibt. In FIG 3 sind drei weitere passiv wirkende Komponenten zur Kühlung und zur Wärmeabfuhr schematisch dargestellt. Von dem Flüssigkeitsbereich 9 reicht eine Notkühleinrichtung in die Druckkammer 2 bzw. den Reaktordruckbehälter 5 hinein. Die Notkühleinrichtung hat Flutleitungen 18, von denen eine die in die Druckkammer 2 und eine andere in den Reaktordruckbehälter 5 hineinführt. Die Flutleitungen 18 sind jeweils mit einem passiv öffnenden Schaltelement 43 während des normalen Betriebs der Kernkraftanlage verschlossen. Die Schaltelemente 43 öffnen bei Überschreiten eines kritischen Druckes bzw. einer kritischen Temperatur innerhalb der Druckkammer 2 bzw. des Reaktordruckbehälters 5. Der Reaktordruckbehälter 5 ist über ein Abblasesystem 19 mit dem Flüssigkeitsbereich 9 verbunden. Das Abblasesystem 19 hat eine Abblaseleitung 20 sowie einen Strömungsweg 7b, durch welche bei einem erhöhten Druck innerhalb des Reaktordruckbehälters 5 Wasserdampf in den Flüssigkeitsbereich 9 abgeblasen werden kann sowie bei einem Absinken des Druckes innerhalb des Reaktordruckbehälters 5 eine Flutung des Reaktordruckbehälters 5 und damit eine Kühlung des Reaktorkerns 6 erfolgt.

In FIG 4 ist in einem Längsschnitt ein weiteres Ausführungsbeispiel eines Strömungsweges 7c alternativ zu dem in FIG 1 dargestellten Strömungsweg 7a gezeigt. Der Strömungsweg 7c wird gebildet durch ein vertikal verlaufendes Rohr 41, welches von der Decke 39 der Druckkammer 2 in den Flüssigkeitsbereich 9 hineinführt und oberhalb des Pegelstandes 10 endet. Über das Rohr 41 ist eine Glocke 40 gestülpt, welche mit der Decke 39 fest und flüssigkeitsdicht verbunden ist. Im Bereich der Decke 39 weist die Glocke 40 Austrittsöffnungen 16 auf. Hierdurch kann aus der Druckkammer 2 ausströmender Wasserdampf über die Eintrittsöffnung 15 durch das Rohr 41 bis zu dem Scheitelpunkt 14 und von dort zwischen dem Rohr 41 und der Glocke 40 zu den Austrittsöffnungen 16 strömen. Die Glocke 40 sowie das Rohr 41 haben jeweils ein kreisringförmiges Querschnittsprofil, wobei der Durchmesser des Rohres 41 etwa 2 m und der Durchschnitt der Glocke 40 etwa 3 m beträgt. Die Austrittsöffnungen 16 sind in vier Gruppen zusammengefaßt, die jeweils um 90° zueinander versetzt sind.

In FIG 5 ist schematisch das Abblasesystem 19 aus FIG 3 vergrößert dargestellt. Von dem Reaktordruckbehälter 5 verlaufen drei Frischdampfleitungen 26. An jede Frischdampfleitung 26 sind Abblaseleitungen 20 angeschlossen, die jeweils durch die Decke 39 der Druckkammer 2 in den Flüssigkeitsbereich 9 hineinführen. In dem Flüssigkeitsbereich 9 enden die Abblaseleitungen 20 jeweils in einer Lochdüse 36. Innerhalb der Druckkammer 2 hat jede Abblaseleitung 20 ein Steuerungs- und Entlastungsventil 21, durch welches die Abblaseleitungen 20 während des normalen Betriebes der Kernkraftanlage versperrt ist. Zudem ist an jeder Abblaseleitung 20 eine Vorsteuerung angeschlossen, bei der von der Frischdampfleitung 26 jeweils zwei Vorsteuerleitungen 38 abzweigen, die jeweils ein Vorsteuerventil 37 enthalten und die in die Abblaseleitung 20 zwischen der Lochdüse 36 und dem Entlastungsventil 21 einmünden. Das Abblasesystem 19 dient sowohl dem Abblasen von Wasserdampf aus dem Reaktordruckbehälter 5 in die Kühlflüssigkeit 11 zur Druckentlastung des Reaktordruckbehälters 5 sowie in entgegengesetzter Richtung der Flutung des Reaktordruckbehälters 5. Durch Verwendung der Lochdüsen 36 erfolgt eine verteilte Eindüsung von Wasserdampf in die Kühlflüssigkeit 11, wodurch ein deutlicher Druckabbau des in dem Wasserdampf herrschenden Druckes erreicht wird.

Die Erfindung zeichnet sich durch einen Sicherheitsbehälter einer Kernkraftanlage, insbesondere mit einem Siedewasser-Reaktor, aus, bei dem auf passive Art und Weise bei einer Betriebsstörung, insbesondere bei einem Verlust an Kernkühlmittel, eine Kühlung des Reaktorkerns sowie eine Wärmeabfuhr an die Umgebung erreicht wird. Hierzu ist oberhalb einer Druckkammer mit geringem Volumen eine Kondensationskammer mit großem Volumen vorgesehen, die aus einem Flüssigkeitsbereich und einem darüber angeordneten Luftbereich besteht. Die Menge des in dem Flüssigkeitsbereichs vorgesehenen Kühlmittels reicht aus, um die Druckkammer sowie den Reaktordruckbehälter zu fluten und um zu gewährleisten, daß aus dem Reaktordruckbehälter ausströmender Wasserdampf zum Zwecke des Druckabbaus immer durch das Kühlmittel geführt wird. Der Luftbereich wird von einer schalenförmigen Stahlwand umschlossen, an der, falls erforderlich, Wasserdampf kondensiert und in den Flüssigkeitsbereich zurückgelangt. Weiterhin erfolgt über die Stahlwand aufgrund der guten Wärmeleitfähigkeit des Stahls und ihrer großen Fläche ein Wärmeaustausch mit der Umgebung, wodurch eine Wärmeabfuhr ohne Eingriffe des Bedienungspersonals bzw. von Sicherheitssystemen gewährleistet ist. Bis auf vereinzelte Schalthandlungen, wie Versperren von Durchführungen durch den Sicherheitsbehälter sowie Öffnen von Entlastungsventilen, erfolgt die Kühlung und die Wärmeabfuhr auf vollständige passive Art und Weise. Insbesondere erfolgt eine Flutung der Druckkammer sowie des Reaktordruckbehälters aufgrund der Schwerkraft.

## Patentansprüche

1. Sicherheitsbehälter (1) nach dem Druckunterdrückungsprinzip für eine Kernkraftanlage mit einem entlang einer Hauptachse (4) angeordneten Reaktordruckbehälter (5), der den Reaktorkern (6) beinhaltet, mit einer Druckkammer (2), die den Reaktordruckbehälter (5) umgibt, und mit einer Kondensationskammer (3), die einen Luftbereich (8) und einen Flüssigkeitsbereich (9) zur Aufnahme von Kühlflüssigkeit (11) umfaßt, wobei die Kondensationskammer (3) weitgehend geodätisch oberhalb der Druckkammer (2) angeordnet und die Druckkammer (2) mit dem Flüssigkeitsbereich (9) über einen Strömungsweg (7a, 7b, 18) verbunden ist.

2. Sicherheitsbehälter (1) nach Anspruch 1, bei der der Flüssigkeitsbereich (9) während eines normalen Betriebes der Kernkraftanlage bis zu einem geodätisch oberhalb der Druckkammer (2) liegenden Pegelstand (10) mit Kühlflüssigkeit (11) befällt ist und der Luftbereich (8) sich geodätisch oberhalb des Flüssigkeitsbereichs (9) erstreckt.

3. Sicherheitsbehälter (1) nach Anspruch 2, bei dem der Strömungsweg (7a, 7c) annähernd U-förmig verläuft, einen Scheitelpunkt (14), eine Austrittsöffnung (15) zur Druckkammer (2) und eine Eintrittsöffnung (16) zum Flüssigkeitsbereich (9) hat, und der Scheitelpunkt (14) oberhalb des Pegelstandes (10) liegt.

4. Sicherheitsbehälter (1) nach einem der vorhergehenden Ansprüche, bei dem der Luftbereich (8) von einer glockenartigen Stahlwand (12) begrenzt ist.

5. Sicherheitsbehälter (1) nach einem der vorhergehenden Ansprüche, mit einer Notkühleinrichtung, die einen Strömungsweg (7b, 18) zur Flutung der Druckkammer (2) von dem Flüssigkeitsbereich (9) in die Druckkammer (2) hinein aufweist.

6. Sicherheitsbehälter (1) nach Anspruch 5, bei dem die Notkühleinrichtung eine Flutleitung (18) zur Flutung des Reaktordruckbehälters (5) aufweist, die den Flüssigkeitsbereich (9) mit dem Reaktordruckbehälter (5) verbindet.

7. Sicherheitsbehälter (1) nach einem der vorhergehenden Ansprüche, mit einem Abblasesystem (19), welches Abblaseleitungen (20) aufweist, die von dem Reaktordruckbehälter (5) in den Flüssigkeitsbereich (9) führen.

8. Sicherheitsbehälter (1) nach einem der vorhergehenden Ansprüche, bei dem in dem Flüssigkeitsbereich (9) eine Menge an Kühlflüssigkeit (11) speicherbar ist, so daß bei einer Flutung der Druckkammer (2) und/oder des Reaktordruckbehälters (5) der Flutungspegelstand (21) der Kühlflüssigkeit (11) geodätisch oberhalb einer Eintrittsöffnung (16) liegt, an welcher der Strömungsweges (7a, 7b, 18) in den Flüssigkeitsbereich (9) mündet.

9. Sicherheitsbehälter (1) nach einem der vorhergehenden Ansprüche, der eine Schutzhülle (22) besitzt, die den Luftbereich (8) umgibt, wobei zwischen Luftbereich (8) und Schutzhülle (22) ein Wärmeaustauschraum (23) zur Führung eines Kühlgases (24) vorgesehen ist.

10. Sicherheitsbehälter (1) nach einem der vorhergehenden Ansprüche, der einen Notkondensator (25) aufweist, welcher in dem Flüssigkeitsbereich (9) angeordnet und mit dem Reaktordruckbehälter (5) verbunden ist.

11. Sicherheitsbehälter (1) nach einem der vorhergehenden Ansprüche, bei dem der Flüssigkeitsbereich (9) zumindest eine Vertiefung (27) hat, die in die Druckkammer (2) bis etwa zur Höhe des Reaktorkerns (6) hineinragt und in der ein Notkondensator (25) angeordnet ist.
